# EUROPEAN PATENT APPLICATION

(11) **EP 4 249 316 A1**
(43) Date of publication of application: **27.09.2023**
(21) Application number: 23158096.0
(22) Date of filing: 23.02.2023
(51) Int. Cl.: B60L 53/14, B60L 53/18, B60L 53/31

(54) **A CHARGING STATION FOR ELECTRIC VEHICLES**

(30) Priority: 21.03.2022 CH 3032022; 21.03.2022 IT 202200005528
(71) Applicant: Marino Bernasconi SA, 6930 Bedano (CH)
(72) Inventor: Bernasconi, Andrea, 6982 Agno (CH)
(74) Representative: Postiglione, Ferruccio

(57) **Abstract**

The present invention relates to a charging station (1) for electric vehicles comprising a containment body (11) within which a plurality of electric charging systems for the electric vehicles are housed, each of which is independent and provided with a battery charger (51) operatively connected to the electric power supply (101), a charging cable operatively connected to the battery charger (51), a management device (52) of the charging cable; wherein each of the electric charging systems comprises an activation button (502) and wherein the containment body (11) comprises a plurality of inner carters (311) able to define separate housing portions for the charging cables and an initialization button (501) of the charging station (1), wherein the computerized control means are able to allow the activation of the battery charger (51) by simultaneously pressing said initialization button (501) and the activation button (502), and are able to allow the movement of the pulley (152) for the winding of the charging cable following a winding command from the user or after a predetermined deactivation time of the battery charger (51), wherein the predetermined deactivation time is calculated from the extraction of the charging cable.

## Description

### Field of invention

The present invention relates to the field of management of electric vehicles. In particular, the present invention relates to charging stations for electric vehicles, in particular for e-bike and similar.

### Background art

The increasing use of electric vehicles for collective or personal mobility requires the provision of charging stations capable of satisfying the electric charge requirements for the batteries of the aforementioned vehicles.

Charging needs are particularly relevant for electric vehicles intended for short-range personal mobility or micro-mobility.

Micro-mobility refers to a range of small and light vehicles operating at speeds typically below 25km/h and not exceeding 45km/h, personally driven by users, including bicycles, e-bikes, electric scooters, electric skateboards, shared bicycles and electric pedal assisted bicycles (pedelecs). These vehicles can therefore be propelled by combined human-electric energy or exclusively by electric energy. The most widely used micromobility electric vehicles are pedal assisted bicycles, in the various categories that identify the use for which they are intended, collectively referred to as e-bikes.

In order to allow to recharge of the e-bike, or electric or hybrid vehicles in general, charging stations are available that are increasingly located throughout the environment. Each recharging station may be able to allow a more or less rapid recharge for a single electric vehicle, or for a plurality of these at the same time. The most commonly used types of charging stations include charging points, equipped with one or more available charging sockets connecting the relative electric cables for coupling with the battery of the electric vehicle. These solutions define very compact recharging stations with low production, assembly and installation costs, at the same time avoiding the use of adapters and power supplies external to the charging station itself.

The known solution makes it possible to not carry a suitable bulky and heavy electrical adapter, while still requiring the charging cable for connection to the recharging system of the electric vehicle. Furthermore, since a standard has not been defined with respect to the cables to be used for the various vehicles, or for the different manufacturers of the same type of vehicle, the charging cable may not be suitable for the available charging sockets, or may not be able to guarantee a link with adequate performance or safety.

To overcome the aforementioned drawbacks, charging stations provided and integrated with non-removable charging cables are known, wherein the cable itself defines the complete connection between the charging station and the recharging system of the electric vehicle.

The length of the charging cables available at the aforementioned charging stations must be long enough to guarantee recharging of the electric vehicle even if the latter is not positioned completely close to the charging station itself. In this regard, the charging cables have a size of one or more meters to facilitate recharging regardless of the positioning of the vehicle and of the entrance socket of its charging system.

The length of the charging cables causes an objective difficulty in managing the spaces occupied by them or in their positioning with respect to the charging station itself. For this purpose, known charging stations comprise support elements to which the charging cable can be coupled when disconnected from the vehicle. These support elements allow the charging cable to be arranged in an appropriate manner while not allowing a correct arrangement or leaving this arrangement to the ability and will of the user.

The European Patent Application no. EP3822110A1 describes a system and a method for controlling the retraction of a charging cable of a charging cable management system for charging an electric vehicle, depending on predetermined conditions, for example the end of a charging session determined by the release of a cable used for the charging session from an input socket of the vehicle being charged, or determined by the state of retraction of the cable with respect to a user input.

Other known charging stations use elastic, i.e., partially elastic, charging cables which allow the volume occupied by the charging cable itself to be reduced when not in use, but in any case, fail to solve the problems related to the incorrect or non-arrangement of the charging cable itself, or to its damage.

It would therefore be desirable to have a charging station for electric vehicles capable of minimizing the drawbacks described above. In particular, it would be desirable to have a charging station capable of guaranteeing a correct and quick arrangement and allocation of the charging cable while at the same time guaranteeing management of the recharging activities.

### Summary of the invention

Object of the present invention is to provide a charging station for electric vehicles able to reduce the aforementioned drawbacks.

In particular, the object of the present invention is to provide a charging station for electric vehicles able to allow a simple and safe management of the charging cables with a reduced cost of production and cost of installation.

The scope of the present invention is achieved by a charging station for electric vehicles according to the attached claims.

The charging station for electric vehicles comprises a containment body within which a plurality of electric charging systems for electric vehicles are housed, computerized control means and an electric power supply able to be electrically coupled to the electrical network,
wherein each of the electric charging systems is independent and comprises:
   - a battery charger operatively connected to the electric power supply;
   - a charging cable operatively connected to the battery charger;
   - a management device of the charging cable;
wherein the management device of the charging cable comprises:
   - a pulley able to unwind and to wind the charging cable;
   - moving means of the pulley;
wherein each of the electric charging systems comprises an activation button and wherein the containment body comprises a plurality of inner carters able to define separate housing portions for the charging cables and an initialization button of the charging station,
wherein the computerized control means are operatively connected to the moving means and to the battery charger,
wherein the computerized control means are able to allow the activation of the battery charger for the electric connection of the charging cable following an activation command from a user when the user defines the activation command by simultaneously pressing the initialization button and the activation button, and
wherein the computerized control means are able to allow the movement of the pulley for the winding of the charging cable following a winding command from the user or after a predetermined deactivation time of the battery charger, wherein the predetermined deactivation time is calculated from the extraction of the charging cable.

The computerized control means therefore make it possible to manage the retraction of the charging cable in such a way as to guarantee its correct positioning, the retraction of the charging cable being carried out at the request of the user or being carried out automatically to allow for correct positioning even if the user does not define such correct positioning.

The plurality of charging cables is independent, even though these are connected to a single electric power supply. The containment body allows the components to be protected and to define the compartment in which the charging cable is stored, or from which it is extracted. The housing portions make it possible to separate the charging cables, i.e., all the components dedicated to handling them, maintaining safe and effective management of the charging cables.

Furthermore, pressing both buttons allows the activation of the chosen charging system with selection redundancy.

According to a further embodiment, each of the management devices of the charging cable comprises a retraction button, and
wherein the computerized control means are able to allow the actuation of the pulley for the winding of the charging cable when the user defines the winding command by pressing the retraction button.

In this case, the retraction of the charging cable is performed at the user's request. According to a further embodiment, the predetermined deactivation time is calculated from the disconnection of the charging cable from the electric vehicle to recharge.

According to a further embodiment, the moving means of the pulley comprise an actuation mechanism by means of an elastic element,
wherein the elastic element is able to be pre-tensioned during the movement of the pulley in the unwinding of the charging cable, and
wherein the pre-tensioned elastic element is able to allow the autonomous movement of the pulley for the winding of the charging cable by releasing the pre-tensioning.

The elastic element allows to define a movement of the pulley with extremely low costs.

According to a further embodiment, the moving means of the pulley comprise an actuation mechanism by means of an electric motor, and
wherein the computerized control means are able to operating the electric motor to allow the movement of the pulley for the winding of the charging cable.

The electric motor allows to define a precise and controlled movement of the pulley, avoiding damage to the charging cable itself.

### Description of the figures

These and further features and advantages of the present invention will become apparent from the disclosure of the preferred embodiment, illustrated by way of a non-limiting example in the accompanying figures, wherein:
- Figure 1 shows a perspective front view of a charging station for electric vehicles according to the present invention, according to a first preferred embodiment;
- Figure 2 shows a front plane view of the charging station for electric vehicles of Figure 1;
- Figure 3 shows a lateral plane view of the charging station for electric vehicles of Figure 1;
- Figure 4 shows a front section plane view of the charging station for electric vehicles of Figure 1;
- Figure 5 shows a top section plane view of the charging station for electric vehicles of Figure 1;
- Figure 6 shows a plane front view of the management device of the charging cable of the charging station for electric vehicles of Figure 1;
- Figure 7 shows a lateral plane view of the management device of the charging cable of Figure 6;
- Figure 8 shows a lateral plane view of the management device of the charging cable of Figure 6;
- Figure 9 shows a top plane view of the management device of the charging cable of Figure 6;
- Figure 10 shows a front section plane view of the management device of the charging cable of Figure 6.

### Detailed description of the invention

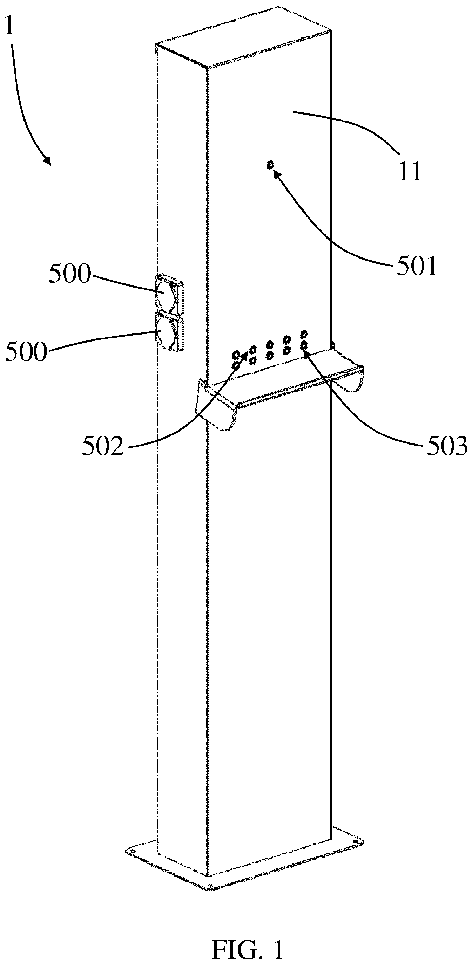

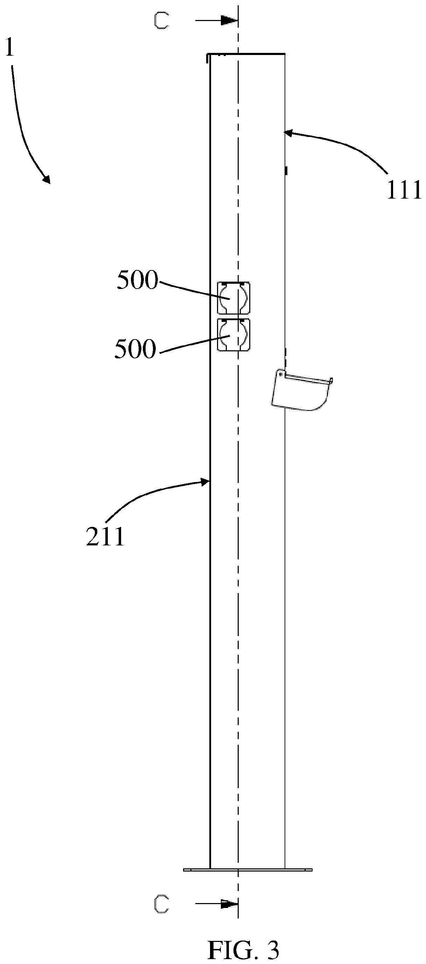

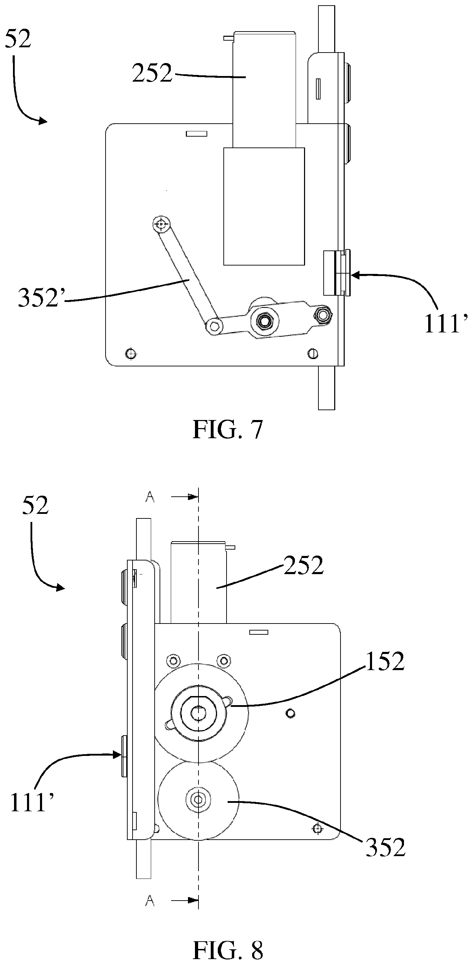

Figures 1-10 illustrate a charging station 1 for electric vehicles in accordance with the present invention. In particular, the aforementioned Figures 1-5 illustrate an embodiment relating to a charging station for electric vehicles for micromobility, such as e-bikes and electric scooters, but according to further embodiments the charging station according to the present invention can be defined to operate according to a plurality of electric vehicles of any type.

The charging station 1 for electric vehicles comprises a containment body 11 which allows to protect the components which define it and which in the preferred embodiment has a parallelepiped shape, but different conformations or different covers with respect to the aforementioned containment body can be used according to further embodiments.

This containment body 11 is defined, in the embodiment described therein, by a front casing 111 and a rear casing 211 coupled to each other to define a containment compartment. The front casing 111 is preferably made of metal material, preferably stainless steel, and defines a monobloc structure without a wall and suitable for supporting the components which define the charging station 1 itself. The rear casing 211 is also preferably made of metal material, preferably stainless steel, and defines the closure of the aforementioned monobloc structure made with the front casing 111.

According to alternative embodiments, not shown, the containing body, if provided, can have different shapes or be made using different materials.

The charging station 1 for electric vehicles comprises a plurality of electric charging systems for electric vehicles, independent of each other. In the preferred embodiment, illustrated therein, five independent charging systems are provided.

In particular, each of the electric charging systems comprises a battery charger 51, a charging cable (not shown) and a management device 52 of said charging cable. The use of a plurality of electric charging systems can allow redundancy with respect to the same charging cable, or to the same charger. In the same way, the plurality of electric charging systems can be different in relation to the type of charging cable used, or to the relative charger, thus allowing to be able to operate on a plurality of different electric vehicles.

The charging station 1 for electric vehicles also comprises computerized control means and an electric power supply 101 adapted to be electrically coupled to the electric grid.

In the preferred embodiment described therein, the containment body 11 described above allows the electric charging systems, the computerized control means and the electric power supply 101 to be housed. Furthermore, two external electrical sockets 500 are provided and arranged on an external side of the containment body 11. These external electrical sockets 500 can be limited in amperage to allow their use only for predetermined loads, for example for charging batteries for electric vehicles for micromobility, excluding the use of higher loads, for example for charging batteries of electric autovehicles.

In this regard, an electric unit defined by the aforementioned electric power supply 101 and by the plurality of chargers 51 is housed within the containment compartment defined by the front casing 111. Each of the chargers 51 is operatively connected to the electric power supply 101 and each of the charging cables is operatively connected to the relative charger 51.

Furthermore, it is also possible to house an electric meter and a protection system within said containment compartment. In this regard, an electrical protection with circuit breakers, for example a circuit breaker to be used for the electric power supply 101 and a circuit breaker to be used for the external electrical sockets 500.

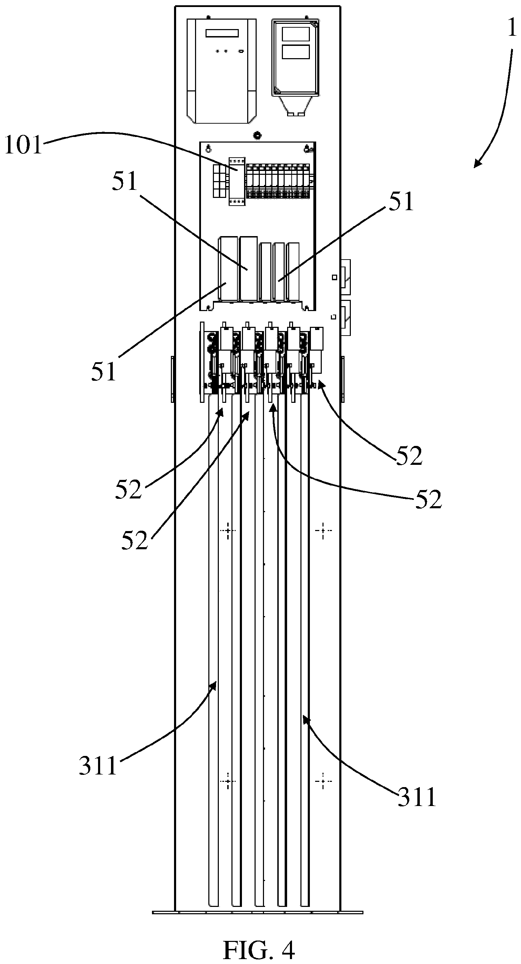

The housing within the containment compartment is illustrated in greater detail in section C-C of Figure 4.

The plurality of charging cables is, therefore, independent, even though these are connected to a single electric power supply 101. The length of the charging cables can vary according to the use and design needs, but is preferably between 2m and 3m, even more preferably equal to 2.2m.

Therefore, the containment compartment defined by the front casing 111 further defines the compartment in which the charging cable is stored, or from which it is extracted, as described in greater detail below. The front casing 111 is provided with a plurality of cable guide openings 111' able to define the correct sliding of the charging cable during the winding and unwinding operations of the same. The size of the aforementioned cable guide openings 11 1' is such as to be large enough to guarantee effective sliding but, at the same time, small enough not to allow the passage of the connector located on the relative ends of the charging cable. Coupled to the front casing 111 there is a mobile casing 111", preferably made of plastic material, for example polycarbonate. This is intended to protect the aforementioned connectors and possibly defines a support surface for further equipment or batteries to be charged. This movable casing 111" is arranged substantially perpendicular to the front panel of the front casing 111 and at the cable guide openings 111' so as to protect the connectors from any bad weather. The containment body 11 can be provided with suitable slits (not shown) having the purpose of allowing the passage of hot air generated by the electric and electronic components. These slots can be arranged in any point of the containment body 11 itself, but are preferably arranged in its upper portion.

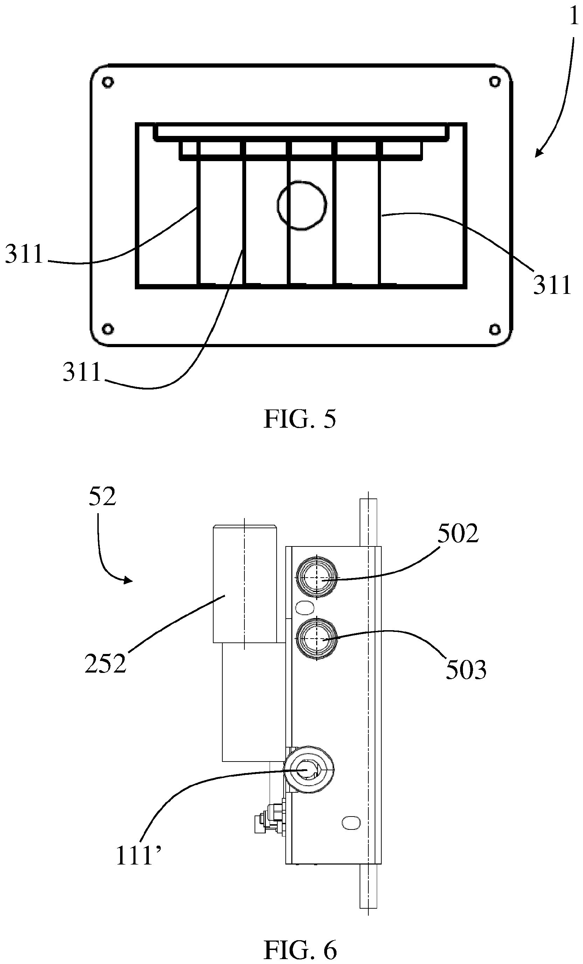

Preferably, the containment body 11 comprises a plurality of inner carters 311 able to define separate housing portions for the charging cables. These housing portions are only illustrated in greater detail in section D-D of Figure 5 and allow the charging cables, or all the components dedicated to handling them, to be separated, maintaining safe and effective management of the charging cables themselves. The aforementioned inner carters 311 are positioned within the front casing 111, but they could equally be defined in different positions or coupled to different elements of the containment body or even not be provided according to different embodiments.

In consideration of the number of charging stations provided in the preferred embodiment, the number of inner carters 311 is equal to five, but a different number could in any case be used. These inner carters 311 are made of panels preferably made of metallic material and which extend from the devices 52 for managing the relative recharge cables to the bottom of the containment body 11 itself, but different extensions can be used.

According to alternative embodiments, not shown, the charging station for electric vehicles according to the present invention can comprise any number of charging systems, consequently modifying the occupied volume. The charging station itself must therefore comprise computerized control means, an electric power supply able to be electrically coupled to the electric network and at least one electric charging system for electric vehicles. The latter is therefore equipped with a charger operationally connected to the power supply, a charging cable operationally connected to the charger and a management device of the charging cable.

The management device 52 of the charging cable comprises a pulley 152 suitable for unwinding and winding the charging cable, as well as moving means 252 of the aforementioned pulley 152.

The computerized control means are operatively connected to the aforesaid moving means 252 as well as to the charger 51. In particular, the computerized control means are able to allow the activation of the charger 51 for the electrical connection of the charging cable following a command activation of a user. In the same way, the computerized control means are able to allow movement of the pulley 152 for winding the charging cable itself following a command to wind up the charging cable from the same user, or after a predetermined deactivation time of the charger 51. Taking into consideration the plurality of charging systems of the preferred embodiment, their independence is also obtained by means of the aforementioned computerized control means as they are able to define a selective activation of the relative chargers 51 and the movement selection of the relative pulleys 152.

The computerized control means therefore allow to manage the retraction of the charging cable in such a way as to guarantee its correct positioning. In particular, the computerized control means make it possible to define the correct retracted positioning of the charging cables within the containment compartment defined by the front casing 111. The actuation of the pulleys 152 by the computerized control means.

Figures 6-10 illustrate in greater detail management device 52 of the charging cable according to the preferred embodiment described therein, in which the moving means 252 for the pulley 152 comprise an actuation mechanism by means of an electric motor 252 capable of defining precise and controlled movement of the pulley 152, avoiding damage to the charging cable moved by it.

In this regard, the computerized control means (not shown) are able to operate the electric motor 252 to allow movement of the pulley 152 for winding the charging cable.

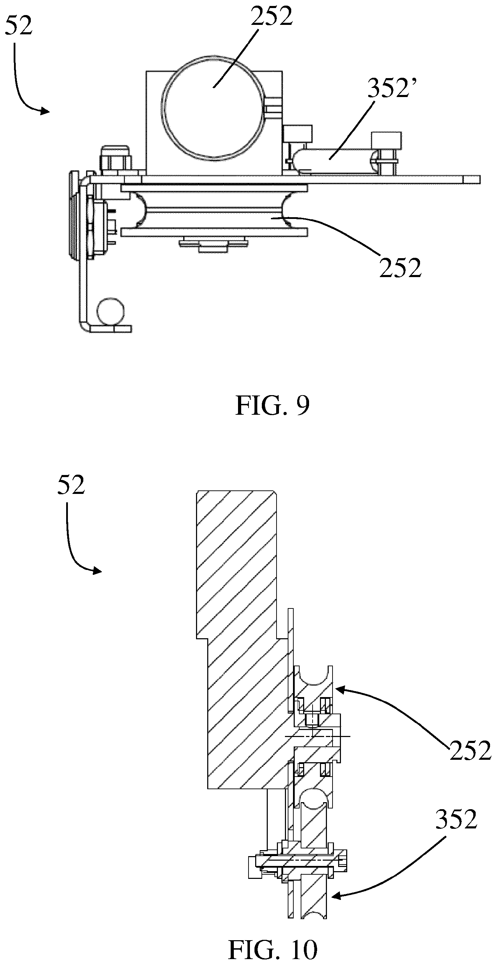

In greater detail, the management device 52 for the charging cable illustrated in Figures 6-10 comprises a pressure wheel 352 operatively coupled to the pulley 152 and driven by this in movement following the rotation of the axis of the electric motor 252, on which the same pulley 152 is keyed. A pressure spring 352' is operatively connected to the pressure wheel 352 in such a way as to keep it close to the pulley 152. In particular, the charging cable is inserted between the seat of the pulley 152 and the seat of the pressure wheel 352, these seats being illustrated in greater detail in section A-A of Figure 10, so as to be aligned and kept in position by the pressure exerted by the aforementioned pressure wheel 352 or by the pressure spring 352' coupled thereto. The rotation of the pulley 152 defines an increase in the number of windings of the charging cable on it, during the retraction of the charging cable, or a decrease in the same number of windings, during the extraction of the charging cable. The pressure spring 352' allows to adjust the distance of the pressure wheel 352 from the pulley 152 according to the number of windings of the charging cable.

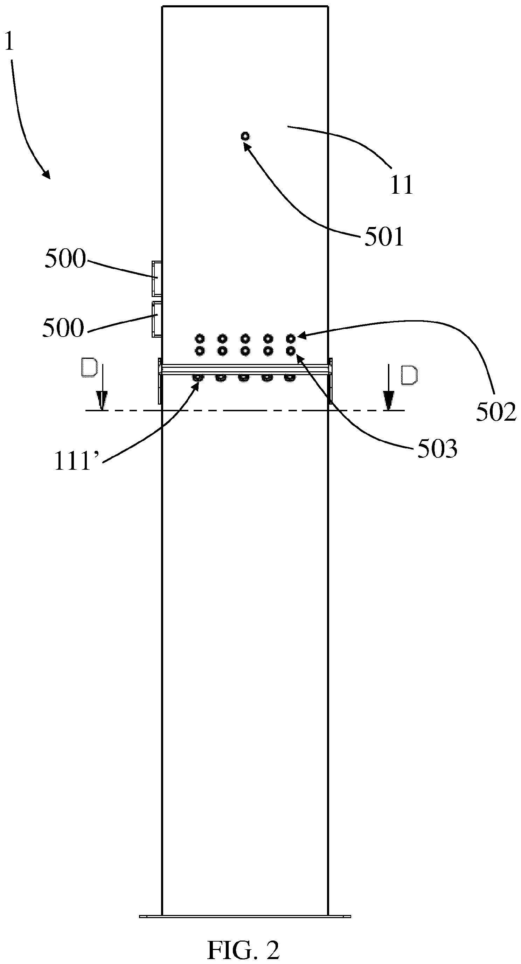

The charging station 1 for electric vehicles comprises an initialization button 501 of the charging station 1 itself, illustrated in greater detail in Figures 1 and 2 and operable by a user. Additional buttons can also be employed, allowing the user to operate when desired.

As illustrated in the aforementioned Figures 1 and 2, as well as in greater detail in Figure 6, each of the electric charging systems comprises an activation button 502, the latter being operable by a user. The computerized control means are adapted to allow the activation of the charger 51 for the electrical connection of the charging cable when the user defines the activation command by means of a simultaneous pressure of the initialization button 501 and of the activation button 502. Pressing both buttons 501, 502 allows activation of the selected charging system with selection redundancy, thus avoiding accidental start of recharging, or the use of the wrong charging cable or charger.

The same Figures 1, 2 and 6 further illustrate a retract buttons 503. In particular, in the embodiment illustrated therein, each management devices 52 of the charging cable comprises a retraction button 503. The computerized control means is able to allow the pulley 152 to be activated for winding the charging cable when the user defines the winding command by pressing the retraction button 503.

In this case, the retraction of the charging cable is performed at the user's request.

The aforementioned buttons 501, 502 and 503 may also not be present according to further embodiments. For example, the computerized control means can be able to allow the pulley 152 to be activated for winding the charging cable after a predetermined deactivation time of the charger 51. In this case, the retraction of the charging cable is performed automatically to allow correct positioning even if the user does not achieve such correct positioning.

Preferably, the predetermined deactivation time is calculated from the extraction of the charging cable or from the disconnection of the charging cable from the electric vehicle to be recharged. This predetermined deactivation time is preferably between 2 and 10 minutes, even more preferably between 4 and 5 minutes.

In a further embodiment, not shown, the moving means of the pulley can comprise an actuation mechanism by means of an elastic element. The elastic element is able to be pre-tensioned during the movement of the pulley in unwinding the charging cable. In this case, the pre-tensioned elastic element is able to allow the autonomous movement of the pulley for winding the charging cable by releasing the pre-tension. This elastic element which is pre-tensioned during unwinding therefore makes it possible to define a movement of the pulley with extremely low costs compared to the mechanism provided with an electric motor, although it is not capable of guaranteeing the same accuracy.

Assuming that each of the charging systems is intended for a specific model of electric vehicle to be charged, the use of the recharging station 1 according to the present invention will be described below with respect to the preferred embodiment detailed above.

Electric charging by means of the charging station 1 according to the present invention firstly involves the selection of the correct charging system. The relative charging cable is extracted manually, by grasping the connector connected to one end of the same and exerting a traction force which allows the desired charging cable to be unwound. The connection of the electric vehicle to be recharged with the charging cable can therefore be carried out by means of the aforementioned connector, thus guaranteeing the charge compatibility.

The computerized control means, actuated by the aforementioned simultaneous pressure of the initialisation button 501 and of the activation button 502, are able to allow the activation of the charger 51 selected for the electrical connection of the charging cable.

When the charge starts, the assumed charging cycle time varies according to the power size of the batteries of the electric vehicle to be charged, but can be estimated at around two hours. However, charging can be stopped at any time. The state of the charging can be displayed on suitable display means or by means of the use of LEDs in correspondence with the aforementioned buttons 501, 502. In this case, the switching on of the LED defines the indication of the charging phase while its switching off can indicate the end of the aforementioned charging phase.

When charging is complete, the charging cable is disconnected from the electric vehicle to be charged and must be returned to the correct position to prevent damage. Therefore, the further retraction button 503 arranged in correspondence with the selected charging cable, alongside the aforementioned activation button 502, allows the user to activate the means for moving the pulley 152.

The computerized control means, activated by the aforesaid pressure of the retraction button 503, are able to allow the movement of the pulley 152 for winding the charging cable. In this case, the pulley 152 is moved by the electric motor 252 to wind the charging cable and arrange it within the containment compartment defined by the containment body 11, where the volume available for the charging cable is defined by the plurality of inner casing 311 and the relative housing portions defined by them.

If the user inadvertently or voluntarily fails to wind up the charging cable, the aforementioned computerized control means can automatically operate the retraction of the charging cable after a predetermined deactivation time of the charger 51. For example, the computerized control means verify the time elapsed since the charging cable was disconnected from the electric vehicle, i.e., from the interruption of recharging activities after the recharging cycle was completed. In this case, after a predetermined deactivation time, for example equal to four minutes, the control means automatically activate the movement means of the pulley 152 for the retraction of the charging cable, restoring the winding of the same charging cable within the housing compartment of the containment body 11. The charging station for electric vehicles according to the present invention is, therefore, capable of guaranteeing simple and safe management of the charging cables with a reduced production and installation cost.

In particular, the charging station for electric vehicles according to the present invention allows to operate a reduced maintenance, where the charging cables can be used and stored correctly by the user or automatically, thus avoiding damages which would make unusable them and the charging station itself.

## Claims

1. A charging station (1) for electric vehicles comprising a containment body (11) within which a plurality of electric charging systems for said electric vehicles are housed, computerized control means and an electric power supply (101) able to be electrically coupled to the electrical network,
wherein each of said electric charging systems is independent and comprises:
- a battery charger (51) operatively connected to said electric power supply (101);
- a charging cable operatively connected to said battery charger (51);
- a management device (52) of said charging cable;
wherein said management device (52) of said charging cable comprises:
- a pulley (152) able to unwind and to wind said charging cable;
- moving means of said pulley (152);
wherein each of said electric charging systems comprises an activation button (502) and wherein said containment body (11) comprises a plurality of inner carters (311) able to define separate housing portions for said charging cables and an initialization button (501) of said charging station (1),
wherein said computerized control means are operatively connected to said moving means and to said battery charger (51),
wherein said computerized control means are able to allow the activation of said battery charger (51) for the electric connection of said charging cable following an activation command from a user when the user defines said activation command by simultaneously pressing said initialization button (501) and said activation button (502), and
wherein said computerized control means are able to allow the movement of said pulley (152) for the winding of said charging cable following a winding command from said user or after a predetermined deactivation time of said battery charger (51), wherein said predetermined deactivation time is calculated from the extraction of said charging cable.

2. The charging station (1) for electric vehicles according to claim 1, wherein each of said management devices (52) of said charging cable comprises a retraction button (503), and
wherein said computerized control means are able to allow the actuation of said pulley (152) for the winding of said charging cable when the user defines said winding command by pressing the said retraction button (503).

3. The charging station (1) for electric vehicles according to claim 1 or 2, wherein said predetermined deactivation time is calculated from the disconnection of said charging cable from said electric vehicle to recharge

4. The charging station for electric vehicles according to one of claims from 1 to 3, wherein said moving means of said pulley comprise an actuation mechanism by means of an elastic element,
wherein said elastic element is able to be pre-tensioned during the movement of said pulley in the unwinding of said charging cable, and
wherein said pre-tensioned elastic element is able to allow the autonomous movement of said pulley for the winding of said charging cable by releasing said pre-tensioning

5. The charging station (1) for electric vehicles according to one of claims from 1 to 4, wherein said moving means of said pulley (152) comprise an actuation mechanism by means of an electric motor (252), and
wherein said computerized control means are able to operating said electric motor (252) to allow the movement of said pulley (152) for the winding of said charging cable.
